(19) Europäisches Patentamt / European Patent Office / Office européen des brevets

(11) **EP 4 738 452 A1**

(12) **EUROPEAN PATENT APPLICATION**

(43) Date of publication:
06.05.2026 Bulletin 2026/19

(21) Application number: 25210014.4

(22) Date of filing: 21.10.2025

(51) International Patent Classification (IPC):
$H01M\ 4/133^{(2010.01)}$  $H01M\ 4/134^{(2010.01)}$
$H01M\ 4/38^{(2006.01)}$  $H01M\ 4/587^{(2010.01)}$
$H01M\ 4/62^{(2006.01)}$  $H01M\ 4/66^{(2006.01)}$
$H01M\ 4/80^{(2006.01)}$  $H01M\ 10/0525^{(2010.01)}$

(52) Cooperative Patent Classification (CPC):
H01M 4/133; H01M 4/134; H01M 4/386;
H01M 4/587; H01M 4/625; H01M 4/661;
H01M 4/80; H01M 4/808; H01M 10/0525

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.10.2024 KR 20240150141
17.10.2025 KR 20250150996

(71) Applicant: SAMSUNG SDI CO., LTD.
Yongin-si, Gyeonggi-do 17084 (KR)

(72) Inventors:
• LEE, Seungjae
17084 Yongin-si, Gyeonggi-do (KR)
• JUNG, Myung-Sung
17084 Yongin-si, Gyeonggi-do (KR)
• BAE, Nanyoung
17084 Yongin-si, Gyeonggi-do (KR)
• SONG, Yeji
17084 Yongin-si, Gyeonggi-do (KR)
• LEE, Sangheon
17084 Yongin-si, Gyeonggi-do (KR)

(74) Representative: Bardehle Pagenberg
Partnerschaft mbB
Patentanwälte Rechtsanwälte
Prinzregentenplatz 7
81675 München (DE)

(54) **NEGATIVE ELECTRODE FOR RECHARGEABLE LITHIUM BATTERY AND RECHARGEABLE LITHIUM BATTERY INCLUDING THE SAME**

(57) A negative electrode for a rechargeable lithium battery and a rechargeable lithium battery including the negative electrode are provided. The negative electrode includes: a negative electrode current collector including a carbon layer including a first porous substrate and a carbon-based material existing inside the first porous substrate and a silicon layer including a second porous substrate and a silicon-based negative electrode active material existing inside the second porous substrate; and a negative electrode active material layer arranged on a surface of the negative electrode current collector and including a negative electrode active material.

FIG. 2

**Description**

**BACKGROUND**

**1. Field**

One or more embodiments of the present disclosure relate to a negative electrode for a rechargeable lithium battery and a rechargeable lithium battery including the same.

**2. Description of the Related Art**

Rechargeable lithium batteries, known for their portability and high energy density, are widely used as power sources in mobile information devices (terminals) such as smart phones, laptops, and/or the like. Recently, there has been active research into developing rechargeable lithium batteries with enhanced (high) safety and (high) capacity for applications as power sources for hybrid vehicles and/or electric vehicles or power storage apparatuses for storing electric power (e.g., power storage systems).

To develop an electrode for rechargeable lithium batteries that deliver high capacity and energy density, it is desirable to use electrode plates with high density. However, as electrode plates become more densely packed, efforts have been made to reduce their internal resistance.

Among various approaches, the use of a carbon layered foil (CLF) substrate has been considered for the negative electrode current collector. A CLF substrate is formed by coating a carbon layer onto a metal foil (e.g., copper foil), which is generally used as a negative electrode current collector, and has advantages such improved adhesion between the electrode plate and the substrate, and/or reduced interfacial resistance.

However, the CLF substrate may adversely affect the energy density of the battery due to the thickness of the carbon coating. To mitigate this issue, increasing the density of the electrode plate has been proposed. Nevertheless, this may lead to increased resistance, which may negatively impact overall battery performance.

**SUMMARY**

In accordance with the present disclosure, a negative electrode as set forth in independent claim 1 and a rechargeable lithium battery as set forth in independent claim 15, are provided. Currently preferred embodiments are described in the dependent claims. One or more aspects of embodiments of the present disclosure are directed toward a negative electrode for a rechargeable lithium battery capable of improving adhesive strength and reducing interfacial resistance without affecting the energy density of the rechargeable lithium battery.

One or more aspects of embodiments of the present disclosure are directed toward a rechargeable lithium battery having excellent or suitable battery performance by including the negative electrode.

Additional aspects will be set forth in part in the description which follows and, in part, will be apparent from the description, or may be learned by practice of the presented embodiments.

According to one or more embodiments of the present disclosure, a negative electrode for a rechargeable lithium battery includes: a negative electrode current collector including a carbon layer including a first porous substrate and a carbon-based material inside (e.g., in) the first porous substrate, and a silicon layer including a second porous substrate and a silicon-based negative electrode active material inside (e.g., in) the second porous substrate; and a negative electrode active material layer including a negative electrode active material and on (e.g., arranged on or disposed on) a (e.g., at least one) surface of the negative electrode current collector.

According to one or more embodiments of the present disclosure, a rechargeable lithium battery includes a positive electrode, the negative electrode, and an electrolyte.

The negative electrode for a rechargeable lithium battery according to one or more embodiments may improve adhesive strength and interfacial resistance without affecting the energy density of the rechargeable lithium battery.

The rechargeable lithium battery according to one or more embodiments may have excellent or suitable battery performance by including the aforementioned negative electrode and the positive electrode. For example, the integration of the negative electrode structure-featuring a carbon-based material and a silicon-based negative electrode active material within porous substrates-should significantly enhance the overall electrochemical stability and efficiency of the battery system. This configuration not only improves the mechanical integrity and adhesion between electrode layers but also facilitates efficient lithium-ion transport and charge transfer during cycling. As a result, the battery may achieve higher capacity retention, reduced internal resistance, and/or improved rate capability, all of which contribute to enhanced performance in both high-power and long-duration applications. Furthermore, the enhanced electrode design may support the development of compact and lightweight battery cells, making them advantageous for use in electric vehicles, portable electronics, and/or energy storage systems.

## BRIEF DESCRIPTION OF DRAWINGS

The accompanying drawings are included to provide a further understanding of the present disclosure and are incorporated in and constitute a part of the present disclosure. The drawings illustrate embodiments of the present disclosure and, together with the description, serve to explain principles of the present disclosure. The above and other aspects, features, and advantages of certain embodiments of the present disclosure will be more apparent from the following description taken in conjunction with the accompanying drawings.

FIG. 1 is a plan view of a porous substrate according to one or more embodiments of the present disclosure.

FIG. 2 is a cross-sectional view schematically illustrating a negative electrode current collector according to one or more embodiments of the present disclosure.

FIGS. 3-6 are each a schematic view illustrating a rechargeable lithium battery according to one or more embodiments of the present disclosure.

## DETAILED DESCRIPTION

Hereinafter, one or more embodiments of the present disclosure will be described in more detail so that those of ordinary skill in the art may easily implement them and understand the disclosure. However, this disclosure may be embodied in many different forms and is not construed as limited to the presented embodiments set forth herein.

The terminology used herein is used to describe embodiments only, and is not intended to limit the present disclosure. The singular expression in the present disclosure may include the plural expression unless the context clearly dictates otherwise. For example, the singular forms "a," "an," "one," and "the" are intended to include the plural forms as well, unless the context clearly indicates otherwise. Further, the use of "may" when describing embodiments of the present disclosure refers to "one or more embodiments of the present disclosure".

As used herein, "combination thereof" refers to a mixture, a laminate, a composite, a copolymer, an alloy, a blend, a reaction product, and/or the like of the constituents.

Here, it should be understood that terms such as "comprise(s)/comprising," "include(s)/including," and/or "has(have)/having" are intended to designate the presence of an embodied feature, number, step (e.g., act or task) , element, or a combination thereof, but it does not preclude the possibility of the presence or addition of one or more other features, number, step (e.g., act or task) , element, or a combination thereof. Additionally, the terms "comprise(s)/comprising," "include(s)/including," "have/has/having", or other similar terms include or support the terms "consisting of" and "consisting essentially of," indicating the presence of stated features, numbers, steps, operations, elements, and/or components, without or essentially without the presence of other features, numbers, steps, operations, elements, components, and/or groups thereof.

In the drawings, the thickness of layers, films, panels, regions, and/or the like, may be exaggerated for clarity, and like reference numerals designate like elements throughout the disclosure, and duplicative descriptions thereof may not be provided for conciseness. It will be understood that if (e.g., when) an element such as a layer, film, region, or substrate is referred to as being "on" another element, it may be directly on the other element, or one or more intervening elements may also be present therebetween. In contrast, if (e.g., when) an element is referred to as being "directly on" another element, there are no intervening elements present therebetween.

In addition, "layer" as used herein includes not only a shape formed on a whole surface if (e.g., when) viewed from a plan view, but also a shape formed on a partial surface (e.g., a portion of whole surface).

The average particle diameter/size may be measured by a method well suitable to those skilled in the art, for example, by a particle size analyzer, or by using a transmission electron microscope image and/or a scanning electron microscope image. In one or more embodiments, it may obtain an average particle diameter value using a dynamic light scattering method by measuring a sample, performing data analysis, counting the number of particles for each particle size range, and calculating from the collected data. Unless otherwise defined, the average particle diameter/size may refer to the diameter/size ($D_{50}$) of particles having a cumulative volume of 50 volume% in a particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates a particle diameter or an average particle diameter, and when the particles are non-spherical, the "diameter" indicates a major axis length or an average major axis length. For example, in one or more embodiments, if (e.g., when) a definition is not otherwise provided, the average particle diameter/size refers to a diameter ($D_{50}$) of particles having a cumulative volume of 50 volume% in a particle size distribution that is obtained by measuring the size (diameter or major axis length) of about 20 particles at random in a scanning electron microscope image.

Here, "and/or," "or," and/or the like are not to be construed as an exclusive meaning, for example, "A or B," "A and/or B", "A/B," and/or the like may be construed to include A, B, A+B, and/or the like.

"Metal" as used herein is interpreted as a concept including one or more selected from among ordinary metals, transition metals, and metalloids (semi-metals).

**Negative Electrode**

In one or more embodiments of the present disclosure, a negative electrode includes: a negative electrode current collector including a carbon layer including a first porous substrate and a carbon-based material inside (e.g., in) the first porous substrate, and a silicon layer including a second porous substrate and a silicon-based negative electrode active material inside (e.g., in) the second porous substrate; and a negative electrode active material layer including a negative electrode active material and on (e.g., arranged on or disposed on) a (e.g., at least one) surface of the negative electrode current collector.

The negative electrode according to one or more embodiments does not like a CLF substrate in which a carbon layer including a carbon-based material is coated on a surface of a metal foil, but replaces the metal foil with a porous substrate having pores so that a carbon-based material may be included in the pores inside the porous substrate, and the metal foil and the carbon layer are not independent separate layers but are combined into a single layer, so as not to affect the energy density of the chargeable lithium battery, while at the same time improving adhesion and reducing interfacial resistance. In addition, by further including a silicon layer including a silicon-based negative electrode active material inside the porous substrate, the energy density of the rechargeable lithium battery may be improved.

Hereinafter, the negative electrode current collector and the negative electrode active material layer will be described in more detail.

**Negative Electrode Current Collector**

According to one or more embodiments of the present disclosure, a negative electrode current collector may include a carbon layer including a first porous substrate and a carbon-based material inside (e.g., in) the first porous substrate, and a silicon layer including a second porous substrate and a silicon-based negative electrode active material inside (e.g., in) the second porous substrate.

The negative electrode current collector according to one or more embodiments uses a porous substrate having a large number of pores instead of a metal foil having no pores, which is usually used as a negative electrode current collector, and combines the porous substrate with the respective material in the internal pores of the porous substrate so that layers including a carbon-based material or a silicon-based negative electrode active material (referring to a carbon layer and a silicon layer as described above) are stacked, thereby resolving the problem and issue of a negative effect on energy density according to the thickness of a carbon layer on a metal thin film in a CLF substrate, and at the same time, the energy density and adhesive strength may be enhanced, and the interfacial resistance may be reduced.

The first porous substrate and the second porous substrates each refer to a substrate having a plurality of pores. Here, the terms "first" and "second" are used to identify the porous substrate included in the carbon layer and the porous substrate included in the silicon layer, respectively, in the substrate region where the carbon layer is arranged and the substrate region where the silicon layer is arranged, and the first porous substrate and the second porous substrate may refer to two regions distinguished in the form of layers within one substrate, and for example, the first porous substrate and the second porous substrate may be understood as a stacked structure, a stacked structure connected to each other, a stacked structure in contact with each other, and/or the like. The first porous substrate and the second porous substrate may be different in material, shape, porosity, and/or the like, or may be the same. In one or more embodiments, the material, shape, porosity, and/or the like of the first porous substrate and the second porous substrate may all be the same.

Because the porous substrate refers to a replacement of the non-porous thin films used as existing negative electrode current collectors with a porous substrate having a large number of pores, materials suitable as materials for negative electrode current collectors that have conductivity without causing chemical changes in rechargeable lithium batteries may be used as the constituent materials. The first porous substrate and the second porous substrate may each independently include a metal. The metal may include copper, nickel, stainless steel, titanium, aluminum, or a combination thereof. For example, the porous substrate may be made of metal.

The porous substrate may have one or more suitable structures, and its type (kind) is not limited as long as it includes a plurality of pores and the aforementioned carbon-based material and silicon-based negative electrode active material may be impregnated into the pores. For example, in one or more embodiments, the porous substrate may have a structure such as a metal foam, or may have a structure such as a mesh. The pores within the porous substrate may be substantially continuous or may be discontinuous in a thickness direction and/or a plane direction. For example, the pores inside the porous substrate may be substantially continuous in the thickness direction but discontinuous in the plane direction, may be discontinuous in the thickness direction but substantially continuous in the plane direction, or may be substantially continuous in both (e.g., simultaneously) the thickness direction and the plane direction, or may be discontinuous in both (e.g., simultaneously) the thickness direction and the plane direction.

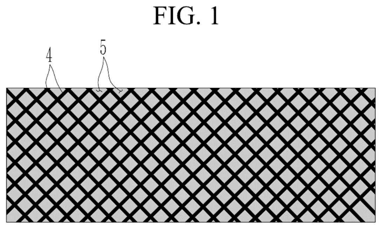

FIG. 1 is a plan view of a porous substrate according to one or more embodiments of the present disclosure. Referring to FIG. 1, in one or more embodiments, a porous substrate 4 has metals (e.g., metal structures) in the shape of a diamond and internal pores 5 therebetween, and in the porous substrate 4, the metals (e.g., metal structures) in the shape of a diamond may be present continuously in the thickness direction of the porous substrate (e.g., forming a hive structure). The pores inside the porous substrate according to FIG. 1 may exist discontinuously in the plane direction, but may exist continuously in the thickness direction. For example, the porous substrate 4 features a repeating diamond-shaped metal structure with internal pores located between these structures. While the pores may appear discontinuous across the surface plane, they may be continuous through the thickness of the porous substrate, potentially forming a hive-like structure.

FIG. 1 is an example of a plan view of a porous substrate having diamond-shaped pores as viewed from above. However, if (e.g., when) the porous substrate is viewed from above, the shape of the pores may be fixed, and the shape may include, for example, a polygonal shape, a circular shape, a cylindrical shape, a slit-shaped shape, an irregular pore, and/or a diamond shape.

A thickness of the first porous substrate and a thickness of the second porous substrate may each be about 5 $\mu$m to about 500 $\mu$m. For example, the thickness of the first porous substrate and the thickness of the second porous substrate may each be about 10 $\mu$m to about 500 $\mu$m, about 50 $\mu$m to about 500 $\mu$m, about 100 $\mu$m to about 500 $\mu$m, about 150 $\mu$m to about 450 $\mu$m, or about 200 $\mu$m to about 400 $\mu$m.

The porosity of the first porous substrate and the second porous substrate may each independently be greater than or equal to about 50%. For example, the porosity of the first porous substrate and the second porous substrate may each independently be greater than or equal to about 55%, greater than or equal to about 60%, greater than or equal to about 65%, greater than or equal to about 70%, greater than or equal to about 75%, or greater than or equal to about 80%, and an upper limit thereof is not specifically limited, but may be, for example, less than or equal to about 99%, less than or equal to about 95%, or less than or equal to about 90%. If (e.g., when) the porosity of the porous substrate satisfies the above ranges, a carbon-based material or a silicon-based negative electrode active material described below may be appropriately or suitably filled into the pores of the porous substrate, thereby improving adhesive strength and reducing interfacial resistance. The porosity may be measured by the liquid or gas adsorption method according to ASTM D-2873.

The size of the pores in each of the first porous substrate and the second porous substrate may independently be about 300 micrometers ($\mu$m) to about 1,000 $\mu$m. The size of the pores may be an average pore size. For example, in one or more embodiments, the size of the pores in each of the first porous substrate and the second porous substrate may independently be about 300 $\mu$m to about 900 $\mu$m, about 300 $\mu$m to about 800 $\mu$m, or about 300 $\mu$m to about 700 $\mu$m. If (e.g., when) the size of the pores satisfies the above range, the mobility of electrons may be improved by increasing a contact area between the negative electrode active material and the negative electrode current collector. The size of the pores may be measured by the Brunauer-Emmett-Teller (BET) 6-point method, by nitrogen gas adsorption flow method, or using a scanning electron microscope (SEM) image, a mercury porosimeter, a capillary flow porometer, or a porosimetry analyzer (Bell Japan Inc, Belsorp-II mini). In a case where the pores inside the porous substrate according to one or more embodiments exist discontinuously in the plane direction but continuously in the thickness direction, the size of the pores of the porous substrate may be measured by measuring the size of the pores when the porous substrate is viewed from above, and the top of the porous substrate refers to the direction perpendicular to the thickness direction of the negative electrode current collector, that is, when viewed in the plane direction. As shown in FIG. 1, if (e.g., when) the pore is in a diamond shape according to one or more embodiments, the size of the pores may be calculated by measuring a minor axis length and a major axis length of one diamond-shaped pore among the pores present on the upper surface and calculating the average value of them.

The carbon layer includes a first porous substrate and a carbon-based material present inside (e.g., in) the first porous substrate. The carbon-based material (e.g., carbonaceous material) may include amorphous carbon, and the amorphous carbon may include carbon black, carbon nanotubes, soft carbon, hard carbon, a mesophase pitch carbonized product, calcined coke, or a combination thereof.

In one or more embodiments, the carbon layer may further include a binder together with the aforementioned carbon-based material, and the carbon layer may include an excessive amount of the binder.

The binder may serve to adhere carbon-based material particles well to each other and also to adhere carbon-based material well to the silicon layer. The binder may include a non-aqueous (e.g., water-insoluble) binder, an aqueous (water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, poly(meth)acrylic acid, and combinations thereof.

If (e.g., when) an aqueous binder is used as the binder, a cellulose-based compound capable of imparting viscosity may be further included. The cellulose-based compound may include at least one of carboxymethyl cellulose, hydroxypropylmethyl cellulose, methyl cellulose, and an alkali metal salt thereof. The alkali metal may include Na, K, or Li.

The dry binder may be a polymer material capable of being fibrous, and may be, for example, polytetrafluoroethylene, polyvinylidene fluoride, a vinylidene fluoridehexafluoropropylene copolymer, polyethylene oxide, or a combination thereof.

For example, in one or more embodiments, an amount of the carbon-based material in the carbon layer may be about 10 wt% to about 30 wt% based on 100 wt% of the carbon layer, and an amount of the binder may be about 70 wt% to about 90 wt% based on 100 wt% of the carbon layer. When the carbon-based material and binder satisfy the above amount ranges within the carbon layer, the carbon-based material may be well dispersed, thereby facilitating the formation of the carbon layer. The meaning of 100 wt% of the carbon layer as used herein refers to 100 wt% of the total weight of the carbon layer excluding the first porous substrate.

The silicon layer includes a second porous substrate and a silicon-based negative electrode active material inside (e.g., in) the second porous substrate. The silicon-based negative electrode active material may be silicon, a silicon-carbon composite, $SiO_x$ $(0 < x \leq 2)$, a Si-Q alloy (wherein Q is an element selected from among an alkali metal, an alkaline earth metal, a Group 13 element, a Group 14 element, a Group 15 element, a Group 16 element, a transition metal, a rare earth element, and combinations thereof, but is not Si), or a combination thereof. The element Q may be selected from among magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), thallium (Tl), germanium (Ge), phosphorous (P), arsenic (As), antimony (Sb), bismuth (Bi), sulfur (S), selenium (Se), tellurium (Te), polonium (Po), and combinations thereof. In one or more embodiments, the silicon-based negative electrode active material may include a silicon-carbon composite.

The silicon-carbon composite may be in the form of particles, and the average particle diameter ($D_{50}$) of the silicon-carbon composite particles may be, for example, about 0.5 μm to about 20 μm. The average particle diameter ($D_{50}$) is measured with a particle size analyzer and refers to a diameter of particles with a cumulative volume of 50 volume% in the particle size distribution. The silicon may be included in an amount of about 10 wt% to about 60 wt%, and the carbon may be included in an amount of about 40 wt% to about 90 wt%, based on 100 wt% of a total weight of the silicon-carbon composite particles. For example, in one or more embodiments, the silicon-carbon composite particles may each include a core including silicon particles, and a carbon coating layer on the surface of the core. An average particle diameter ($D_{50}$) of the silicon particles may be about 10 nanometers (nm) to about 1 μm or about 10 nm to about 200 nm in the core. The silicon particles may exist as silicon alone, in the form of a silicon alloy, or in an oxidized form. The oxidized form of silicon may be represented by $SiO_x$ $(0<x\leq2)$. In addition, a thickness of the carbon coating layer may be about 5 nm to about 100 nm.

In one or more embodiments, the silicon-carbon composite particles may each include a core including silicon particles and crystalline carbon, and a carbon coating layer arranged on a surface of the core and including amorphous carbon. For example, in one or more embodiments, in each of the silicon-carbon composite particles, amorphous carbon may not exist in the core but only in the carbon coating layer. The crystalline carbon may be artificial graphite, natural graphite, or a combination thereof, and the amorphous carbon may be formed from coal-based pitch, mesophase pitch, petroleum-based pitch, coal-based oil, heavy petroleum oil, or a polymer resin (phenol resin, furan resin, polyimide resin, and/or the like). Here, an amount of the crystalline carbon may be about 10 wt% to about 70 wt%, and an amount of the amorphous carbon may be about 20 wt% to about 40 wt%, based on 100 wt% of the total weight of the silicon-carbon composite particles.

In the silicon-carbon composite particle, the core may include pores in the center. A radius of the pore may be about 30 length% to about 50 length% of a radius of the silicon-carbon composite particle.

The aforementioned silicon-carbon composite particles may effectively suppress or reduce problems such as volume expansion, structural collapse, or particle crushing due to charging and discharging, prevent or reduce disconnection of conductive paths, achieve high capacity and high efficiency, and are advantageous to be used under a high-voltage or high-rate charging conditions.

The silicon layer may optionally further include a binder, a conductive material, or a combination thereof together with the silicon-based negative electrode active material.

The binder serves to adhere silicon-based negative electrode active material particles well to each other and also to adhere silicon-based negative electrode active material well to the carbon layer. The binder may include a non-aqueous (e.g., water-insoluble) binder, an aqueous (water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, poly(meth)acrylic acid, and combinations thereof.

If (e.g., when) an aqueous binder is used as the binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material capable of being fibrous, and may be, for example, polytetrafluoroethylene, polyvinylidene fluoride, a vinylidene fluoridehexafluoropropylene copolymer, polyethylene oxide, or a combination thereof.

The conductive material may be used to provide conductivity to the silicon layer, and any material that does not cause chemical change and is electronically conductive may be used in the battery being constructed. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber each including copper, nickel, aluminum silver, and/or the like; a conductive polymer such as a polyphenylene derivative; and/or a mixture thereof.

In one or more embodiments, the silicon layer may include a silicon-based negative electrode active material, a binder, and a conductive material. In these embodiments, an amount of the silicon-based negative electrode active material in the silicon layer may be about 89 wt% to about 99.9 wt% based on 100 wt% of the silicon layer, an amount of the binder may be about 1 wt% to about 10 wt% based on 100 wt% of the silicon layer, and an amount of the conductive material may be about 0.1 wt% to about 1 wt% based on 100 wt% of the silicon layer. By including a silicon layer including the silicon-based negative electrode active material, energy density may be improved without increasing the thickness of the electrode plate. The meaning of 100 wt% of the silicon layer as used herein refers to 100 wt% of the total weight of the silicon layer excluding the second porous substrate.

The negative electrode current collector may include a carbon layer and a silicon layer, and may have a two-layer structure in which the carbon layer and the silicon layer are stacked in the order of carbon layer-silicon layer, or the negative electrode current collector may have a multilayer structure such as a three-layer structure in which the carbon layer, the silicon layer, and the carbon layer are stacked in the order of carbon layer-silicon layer-carbon layer. In one or more suitable structures, the porous substrate portion where the carbon layer is arranged may be referred to as a first porous substrate, and the porous substrate portion where the silicon layer is arranged may be referred to as a second porous substrate.

For example, in one or more embodiments, the negative electrode current collector may include a first carbon layer (1A), a silicon layer on the first carbon layer (1A), and a first carbon layer (1B) on the silicon layer. The first carbon layer (1A) may include a first porous substrate (1A) and a first carbon-based material (1A) present inside (e.g., in) the first porous substrate (1A), and the first carbon layer (1B) may include a first porous substrate (1B) and a first carbon-based material (1B) present inside (e.g., in) the first porous substrate (1B). Here, the first carbon layer (1A) and the first carbon layer (1B) are only used to distinguish between the carbon layer existing below and the carbon layer existing above the silicon layer, and the specific details of the first carbon layer (1A) and the first carbon layer (1B) may each independently be the same as those described for the carbon layer, and descriptions of the first porous substrate (1A), the first porous substrate (1B), the first carbon-based material (1A), and the first carbon-based material (1B) are also the same as the descriptions of first porous substrate and carbon-based material provided above.

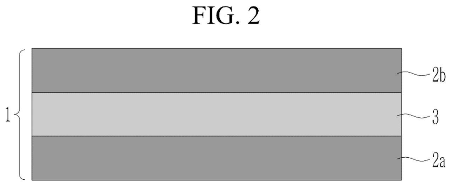

A negative electrode current collector according to one or more embodiments of the present disclosure is illustrated in FIG. 2. FIG. 2 is a schematic view of a negative electrode current collector 1. Here, the negative electrode current collector 1 has a structure in which a first carbon layer (1A) 2a including a first porous substrate (1A) and a first carbon-based material (1A) present inside (e.g., in) the first porous substrate (1A), a silicon layer 3 including a second porous substrate and a silicon-based negative electrode active material present inside (e.g., in) the second porous substrate, and a first carbon layer (1B) 2b including a first porous substrate (1B) and a first carbon-based material (1B) present inside (e.g., in) the first porous substrate (1B) are sequentially stacked. According to one or more embodiments, the negative electrode current collector 1 may have a structure in which carbon layers 2a and 2b are arranged on both (e.g., simultaneously) surfaces (e.g., two opposite surfaces) of a silicon layer 3, so that the carbon layers 2a and 2b on both (e.g., simultaneously) surfaces (e.g., opposite surfaces) may play a role in controlling shrinkage and expansion of a silicon-based negative electrode active material included in the silicon layer 3 depending on charge and discharge.

In FIG. 2, the first porous substrate (1A) refers to a region where the first carbon layer (1A) 2a is provided, the second porous substrate refers to a region where the silicon layer 3 is provided, and the first porous substrate (1B) refers to a region where the first carbon layer (1B) 2b is provided. The first porous substrate (1A) and the first porous substrate (1B) correspond to examples of the aforementioned first porous substrate. The first porous substrate (1A), the second porous substrate, and the first porous substrate (1B) may refer to three regions that are distinguished in the form of layers within one substrate, and for example, the first porous substrate (1A), the second porous substrate, and the first porous substrate (1B) may be understood as a stacked structure, a structure that is stacked and connected to each other, a structure that is stacked in a state of contact, and/or the like.

A thickness of the silicon layer 3 may be about 50% to about 99%, for example, about 60% to about 95%, or about 70% to about 90% based on 100% of the thickness of the negative electrode current collector 1. In other words, the thickness of the silicon layer 3 may be about 50 thickness% to about 99 thickness%, for example, about 60 thickness% to about 95 thickness%, or about 70 thickness% to about 90 thickness% based on 100 thickness% of the total thickness of the negative electrode current collector 1

In addition, a sum of a thickness of the first carbon layer (1A) 2a and a thickness of the first carbon layer (1B) 2b may be about 1 thickness% to about 50 thickness%, for example, about 5 thickness% to about 40 thickness% or about 10 thickness% to about 30 thickness% based on 100 thickness% of the negative electrode current collector 1.

According to one or more embodiments, a thickness ratio of the first carbon layer (1A) 2a to the first carbon layer (1B) 2b may be about 1:9 to about 9:1, for example, about 2:8 to about 8:2, about 3:7 to about 7:3, or about 4:6 to about 6:4. In one or more embodiments, the thicknesses of the first carbon layer (1A) and the first carbon layer (1B) may be substantially the same, i.e., the thickness ratio of the first carbon layer (1A) to the first carbon layer (1B) may be about 1:1.

According to one or more embodiments, the negative electrode current collector may have reduced interfacial resistance and improved adhesive strength with an external electrode plate by the first carbon layer (1A) and the first carbon layer (1B), and may effectively suppress or reduce volume expansion of a silicon-based negative electrode active material by positioning a silicon layer between the first carbon layer (1A) and the first carbon layer (1B). The negative electrode current collector having carbon layers on both (e.g., simultaneously) surfaces (e.g., opposite surfaces) of the silicon layer may exhibit improved processability compared to a structure having a carbon layer on one surface of the silicon layer, while at the same time exhibiting the effects described above.

The negative electrode current collector may be manufactured according to a suitable method if (e.g., when) it has the aforementioned structure.

For example, a negative electrode current collector according to one or more embodiments may be manufactured by a method of preparing a porous substrate, preparing a composition for forming a carbon layer and a composition for forming a silicon layer respectively, impregnating a portion of the porous substrate with the composition for forming a carbon layer, drying and heat-treating to form a carbon layer, and coating and impregnating a portion of the porous substrate on (e.g., in) which the carbon layer is not formed, for example, on the formed carbon layer, with the composition for forming a silicon layer on the formed carbon layer, and drying and heat-treating to form a silicon layer. In the above method, after forming the silicon layer, a composition for forming a carbon layer is coated and impregnated on another portion of the porous substrate where the carbon layer and the silicon layer are not formed, for example, on the formed silicon layer, and drying and heat- treating to further form a carbon layer so as to have a structure as shown in FIG. 2.

The composition for forming the carbon layer may be prepared by, for example, mixing a carbon-based material and a binder at a certain weight ratio and then dispersing the mixture in an aqueous solvent, and the composition for forming the silicon layer may be prepared by mixing a silicon-based negative electrode active material, a binder, and a conductive material at a certain weight ratio and then dispersing the mixture in an aqueous solvent.

**Negative Electrode Active Material Layer**

In one or more embodiments, the negative electrode active material layer is arranged on a (e.g., at least one) surface of the aforementioned negative electrode current collector and includes a negative electrode active material.

The negative electrode active material may include a material capable of reversibly intercalating/deintercalating lithium ions, lithium metal, an alloy of lithium metal, a material capable of doping and dedoping lithium, and/or a transition metal oxide.

The material capable of reversibly intercalating/deintercalating lithium ions may be a carbon-based negative electrode active material.

The carbon-based negative electrode active material may include crystalline carbon, amorphous carbon, or a combination thereof. The crystalline carbon may be irregular shaped, sheet shaped, flake shaped, spherical, or fiber shaped natural graphite or artificial graphite. The amorphous carbon may be a soft carbon, a hard carbon, a mesophase pitch carbonization product, calcined coke, and/or the like. The soft carbon refers to a carbon material that can be graphitized, and is a material that is easily graphitized by heat treatment at a high temperature, for example, about 2800 °C. The hard carbon is a carbon material that cannot be graphitized or is finely graphitized by heat treatment.

In one or more embodiments, the negative electrode active material layer may further include other types (kinds) of negative electrode active materials in addition to the carbon-based negative electrode active material, and may further include, for example, a lithium metal, an alloy of lithium metal, a material capable of doping and dedoping lithium, and/or the like.

As the alloy of lithium metal, an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn) may be used.

As the material capable of doping and dedoping lithium, a silicon-based negative electrode active material or a tin-based negative electrode active material may be used. The silicon-based negative electrode active material is the same as described above, and the tin-based negative electrode active material may include Sn, $SnO_x$ ($0 < x \leq 2$) (e.g., $SnO_2$), a Sn-R alloy (wherein R is an element selected from among an alkali metal, an alkaline earth metal, a Group 13 element, a Group 14 element, a Group 15 element, a Group 16 element, a transition metal, a rare earth element, and combinations thereof, but is not Sn), and/or the like. In one or more embodiments, at least one selected therefrom may be mixed with $SiO_2$ and used. Here, the element R may be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

The specific details of the silicon-based negative electrode active material are the same as those described above in the silicon layer.

In one or more embodiments, the silicon-based negative electrode active material and/or the tin-based negative electrode active material may be used in a mixture with a carbon-based negative electrode active material. In one or more embodiments, the negative electrode active material layer may include a carbon-based negative electrode active material, a silicon-based negative electrode active material, or a combination thereof. If (e.g., when) the carbon-based negative electrode active material and the silicon-based negative electrode active material are mixed and used, a mixing ratio thereof may be about 10:90 to about 99: 1.

In the negative electrode active material layer, the negative electrode active material may be included in an amount of about 95 wt% to about 99 wt% based on a total weight of 100 wt% of the negative electrode active material layer.

The negative electrode active material layer may optionally further include a binder, a conductive material, or a combination thereof, together with the negative electrode active material. As for the binder and the conductive material, the types (kinds) of binder and conductive material that may be included in the silicon layer may be used, and therefore, descriptions of the binder and the conductive material are not repeated here.

In one or more embodiments, the negative electrode active material may be included in an amount of about 90 wt% to about 99.8 wt%, or about 94 wt% to about 99 wt%, based on 100 wt% of a total weight of the negative electrode active material layer, the binder may be included in an amount of about 0.1 wt% to about 5 wt%, or about 0.5 wt% to about 3 wt%, based on 100 wt% of the total weight of the negative electrode active material layer, and the conductive material may be included in an amount of about 0.1 wt% to about 5 wt%, or about 0.5 wt% to about 3 wt%, based on 100 wt% of the total weight of the negative electrode active material layer.

The negative electrode active material layer on at least one surface of the negative electrode current collector may have a multilayer structure of one layer or two or more layers. If (e.g., when) the negative electrode active material layer has a singlelayer structure, it may be as described above, and if (e.g., when) the negative electrode active material layer has a multilayer structure, the type (kind) and amount of each of the negative electrode active material, binder, and conductive material included in each layer of the negative electrode active material layer may be the same or different. If (e.g., when) the negative electrode active material layer has a multilayer structure, it may have a structure of 2 to 5 layers, or 2 to 4 layers, or 2 to 3 layers.

The negative electrode active material layer may be arranged in a certain direction to simplify the movement path of lithium ions. For example, it may be manufactured by coating a composition for forming a negative electrode active material layer (generally the same as "negative electrode slurry") on the aforementioned negative electrode current collector and then applying a magnetic field to align the negative electrode active material in substantially the same direction within the magnetic field. The negative electrode active material may be arranged in a direction parallel to the negative electrode current collector, or in a direction perpendicular to the negative electrode current collector. The specific details are explained in more detail below.

In one or more embodiments, the negative electrode active material layer may have a Degree of Divergence (DD) value defined by Equation 1 of greater than or equal to about 19, for example, about 19 to about 60, or about 30 to about 60.

[Equation 1]

$$DD \text{ (Degree of Divergence)} = (I_a/I_{total}) * 100$$

In Equation 1,

$I_a$ is a sum of peak intensities at non-planar angles measured by X-ray diffraction (XRD) using a CuKα ray, and $I_{total}$ is a sum of peak intensities at all angles measured by XRD using a CuKα ray.

The non-planar angles denote $2\theta = 42.4\pm0.2°$, $43.4\pm0.2°$, $44.6\pm0.2°$, and $77.5\pm0.2°$ if (e.g., when) measured by XRD using a CuK$\alpha$ ray, that is, a (100) plane, a (1021)R plane, a (101)H plane, and a (110) plane. In general, graphite has a structure classified into a rhombohedral structure and a hexagonal structure having an ABAB type (kind) of stacking sequence according to a stacking order of graphene layers, and the R plane denotes the rhombohedral structure, while the H plane denotes the hexagonal structure.

Thus, the $I_a$ may be a sum of peak intensities at $2\theta = 42.4\pm0.2°$, $43.4\pm0.2°$, $44.6\pm0.2°$, and $77.5\pm0.2°$ measured by XRD using a CuK$\alpha$ ray.

The all angles denote $2\theta = 26.5\pm0.2°$, $42.4\pm0.2°$, $43.4\pm0.2°$, $44.6\pm0.2°$, $54.7\pm0.2°$, and $77.5\pm0.2°$ if (e.g., when) measured by XRD using a CuK$\alpha$ ray, that is, a

(002) plane, a (100) plane, a (101)R plane, a (101)H plane, a (004) plane, and a (110) plane. In one or more embodiments, a peak at $2\theta = 43.4\pm0.2°$ may also be considered to appear by being overlapped with a peak of a (101)R plane of a carbon-based material with another peak of a (111) plane of a negative electrode current collector, for example, Cu.

Thus, the $I_{total}$ may be a sum of peak intensities at $2\theta=26.5\pm0.2°$, $42.4\pm0.2°$, $43.4\pm0.2°$, $44.6\pm0.2°$, $54.7\pm0.2°$, and $77.5\pm0.2°$ measured by XRD using a CuK$\alpha$ ray.

In general, peak intensity indicates a height of a peak or an integral area of the peak, and according to one or more embodiments, the peak intensity indicates the integral area of a peak.

In one or more embodiments, the XRD is measured under a measurement condition of $2\theta = 10°$ to $80°$, a scan speed (°/s) (i.e., degree per second) of 0.044 to 0.089, and a step size (°/step) of 0.013 to 0.039 by using a CuK$\alpha$ ray as a target ray but removing a monochromator to improve a peak intensity resolution.

The DD value indicates that the negative electrode active material included in the negative electrode active material layer is oriented at a set or predetermined angle, and a larger value indicates that the negative electrode active material is well oriented. For example, the larger the DD value, the greater the angle at which the negative electrode active material is oriented relative to one surface of the porous substrate. Furthermore, the DD value is maintained after charges and discharges.

In one or more embodiments, the DD value of the negative electrode may be greater than or equal to about 19, for example, about 20 to about 60, about 25 to about 60, about 30 to about 60, about 30 to about 55, about 35 to about 55, or about 40 to about 55. The DD value of greater than or equal to about 19 of the negative electrode refers to that the negative electrode active material is substantially perpendicular to the negative electrode current collector at a certain angle, which refers to that the negative electrode active material layer of the negative electrode is an oriented layer. For example, a substantially vertical standing state does not necessarily refer to standing at a about 90° angle with respect to the negative electrode current collector (e.g., with respect to a surface of the negative electrode current collector on which the negative active material layer is arranged), but rather refers to standing at an angle close to about 90° (e.g., about 90°).

If (e.g., when) the DD value of the negative electrode is less than about 19, the included negative electrode active material layer corresponds to a non-oriented layer, or even if the negative electrode active material layer is an oriented layer, the expansion effect is low and thus not suitable.

In this way, because the negative electrode active material is arranged vertically with respect to the negative electrode current collector, volume expansion may occur in the horizontal direction (e.g., in plane direction) during charging and discharging of a battery including the negative electrode. Accordingly, it may effectively suppress or reduce excessive vertical volume expansion that may occur if (e.g., when) using a negative electrode active material including silicon, thereby significantly reducing the rate of increase in battery thickness and preventing or mitigating the phenomenon of the active material layer being detached from the negative electrode current collector. Therefore, a negative electrode active material including silicon that can improve energy density may be easily applied to a rechargeable lithium battery.

**Rechargeable Lithium Battery**

In one or more embodiments, a rechargeable lithium battery is provided including a positive electrode, the aforementioned negative electrode, and an electrolyte.

**Positive Electrode**

The positive electrode may include a positive electrode current collector and a positive electrode active material layer on the positive electrode current collector. The positive electrode active material layer includes a positive electrode active material (e.g., in a form of particles), and may optionally further include a binder, a conductive material, or a combination thereof.

The positive electrode current collector is not particularly limited as long as it has conductivity (e.g., is a conductor) and does not cause chemical changes in the rechargeable lithium battery. In one or more embodiments, the positive electrode current collector may be an aluminum foil.

As the positive electrode active material, a compound capable of intercalating and deintercalating lithium (lithiated intercalation compound) may be used. For example, in one or more embodiments, at least one composite oxide of lithium and a metal selected from among cobalt, manganese, nickel, and combinations thereof may be used.

The composite oxide may be a lithium transition metal composite oxide, and non-limiting examples thereof may include a lithium nickel-based oxide, a lithium cobalt-based oxide, a lithium manganese-based oxide, a lithium iron phosphate-based compound, a cobalt-free lithium nickel-manganese-based oxide, a lithium-manganese-rich composite oxide, or a combination thereof.

In one or more embodiments, a compound represented by any one selected from among the following chemical formulas may be used: $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the aforementioned chemical formulas, A may be nickel (Ni), cobalt (Co), manganese (Mn), or a combination thereof; X may be aluminum (Al), Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; G may be Al, Cr, Mn, Fe, Mg, lanthanum (La), cerium (Ce), Sr, V, or a combination thereof; and $L^1$ is Mn, Al, or a combination thereof.

In one or more embodiments, the positive electrode active material may include a lithium nickel-based composite oxide represented by Chemical Formula 6, a lithium cobalt-based composite oxide represented by Chemical Formula 7, or a combination thereof.

**[Chemical Formula 6]** $\quad\quad$ $Li_{a6}Ni_{x6}M^6_{y6}M^7_{z6}O_{2-b6}X_{b6}$

In Chemical Formula 6, $0.9 \leq a6 \leq 1.8$, $0.3 \leq x6 \leq 1$, $0 \leq y6 \leq 0.7$, $0 \leq z6 \leq 0.7$, $0.9 \leq x6+y6+z6 \leq 1.1$, and $0 \leq b6 \leq 0.1$, $M^6$ and $M^7$ may each independently be one or more elements selected from among Al, B, Ba, Ca, Ce, Co, Cr, Cu, Fe, Mg, Mn, Mo, Nb, Si, Sn, Sr, Ti, V, W, Y, Zn, and Zr, and X may be one or more elements selected from among F, P, and S.

In one or more embodiments, in Chemical Formula 6, $0.6 \leq x6 \leq 1$, $0 \leq y6 \leq 0.4$, and $0 \leq z6 \leq 0.4$; or $0.8 \leq x6 \leq 1$, $0 \leq y6 \leq 0.2$, and $0 \leq z6 \leq 0.2$.

**[Chemical Formula 7]** $\quad\quad$ $Li_{a7}Co_{x7}M^8_{y7}O_{2-b7}X_{b7}$

In Chemical Formula 7, $0.9 \leq a7 \leq 1.8$, $0.7 \leq x7 \leq 1$, $0 \leq y7 \leq 0.3$, $0.9 \leq x7+y7 \leq 1.1$, and $0 \leq b7 \leq 0.1$, $M^8$ may be one or more elements selected from among Al, B, Ba, Ca, Ce, Cr, Cu, Fe, Mg, Mn, Mo, Ni, Se, Si, Sn, Sr, Ti, V, W, Y, Zn, and Zr, and X may be one or more elements selected from among F, P, and S.

In one or more embodiments, in Chemical Formula 7, $0.8 \leq x7 \leq 1$, and $0 \leq y7 \leq 0.2$; or $0.7 \leq x7 \leq 0.9$, and $0 \leq y7 \leq 0.2$.

In one or more embodiments, the positive electrode active material may be a high nickel-based positive electrode active material in which the nickel content (e.g., amount) is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of a total metal excluding lithium in a lithium transition metal composite oxide. The high nickel-based positive electrode active material may achieve high capacity and may be applied to a high-capacity, high-density rechargeable lithium battery.

An amount of the positive electrode active material may be about 60 wt% to about 99.9 wt%, about 70 wt% to about 99.8 wt%, about 80 wt% to about 99 wt%, or about 90 wt% to about 99.8 wt%, or about 94 wt% to about 99 wt%, based on 100 wt% of a total weight of the positive electrode active material layer.

The binder improves binding properties of positive electrode active material with one another and with the positive electrode current collector. Examples of the binder may include polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth) acrylic resin, a polyester resin, nylon, and/or the like, but embodiments of the present disclosure are not limited thereto.

The conductive material is used to impart conductivity (e.g., electrical conductivity) to the electrode, and any material that does not cause chemical change and conducts electrons may be used in the rechargeable lithium battery. Non-limiting examples of the conductive material may include a carbon-based material such as natural graphite, artificial graphite, carbon black, acetylene black, Ketjen black, a carbon fiber, a carbon nanofiber, and/or carbon nanotube; a metal-based material including copper, nickel, aluminum, silver, and/or the like, in a form of a metal powder or a metal fiber; a conductive polymer such as a polyphenylene derivative; or a mixture thereof.

In the positive electrode active material layer, an amount of the binder may be about 0.1 wt% to about 5 wt%, or about 0.5 wt% to about 3 wt%, based on a total weight of 100 wt% of the positive electrode active material layer, and a content (e.g., amount) of the conductive material may be about 0.1 wt% to about 5 wt%, or about 0.5 wt% to about 3 wt%, based on the total weight of 100 wt% of the positive electrode active material layer.

Here, specific details regarding the negative electrode are not repeated as they are the same as those described above.

**Electrolyte**

For example, the electrolyte for a rechargeable lithium battery may be an electrolyte solution, which may include a non-aqueous organic solvent and a lithium salt.

The non-aqueous organic solvent may serve as a medium for transmitting ions that take part in the electrochemical reaction of the rechargeable lithium battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes; and/or the like.

The non-aqueous organic solvent may be used alone or in a mixture of two or more types (kinds).

In addition, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in the rechargeable lithium battery, enables a basic operation of the rechargeable lithium battery, and improves transportation of the lithium ions between positive and negative electrodes. For example, the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$, x and y are integers of 1 to 20, lithium trifluoromethane sulfonate, lithium tetrafluoroethanesulfonate, lithium difluorobis(oxalato)phosphate (LiDFBOP), and lithium bis(oxalato) borate (LiBOB).

**Separator**

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, for example, may include a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, or a combination thereof on one or both (e.g., simultaneously) surfaces (e.g., two opposite surfaces) of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (for example, TEFLON®), or may include a copolymer or a mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and combinations thereof, but embodiments of the present disclosure are not limited thereto.

In one or more embodiments, the organic material and the inorganic material may be mixed in one coating layer, or a coating layer including an organic material and a coating layer including an inorganic material may be stacked.

**Rechargeable Lithium Battery**

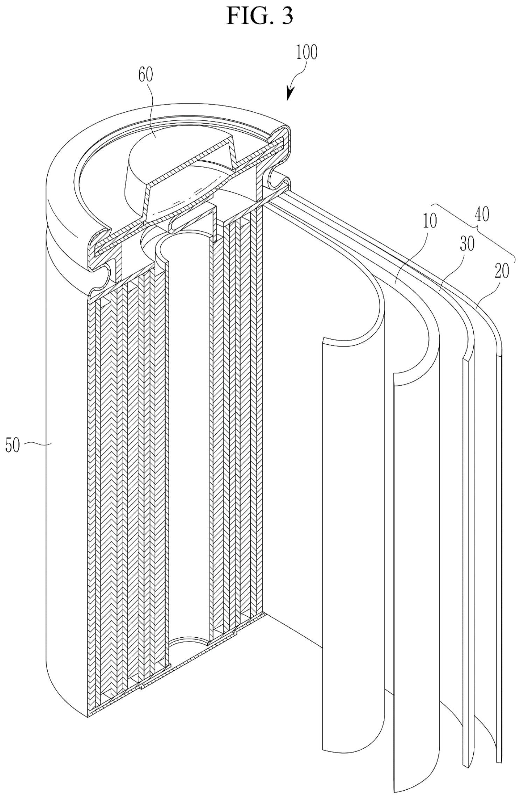

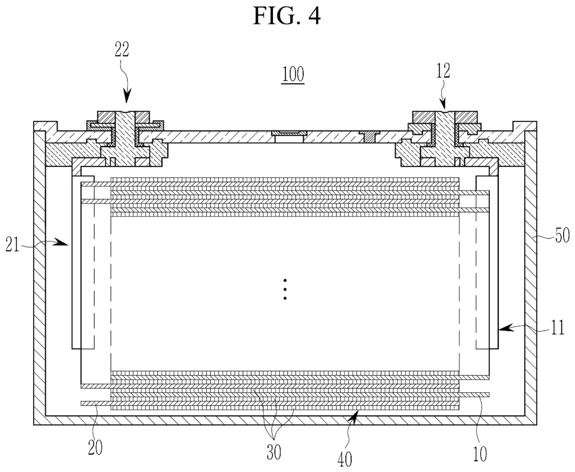

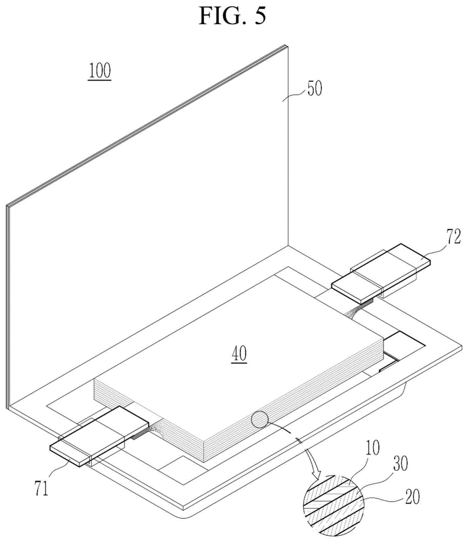

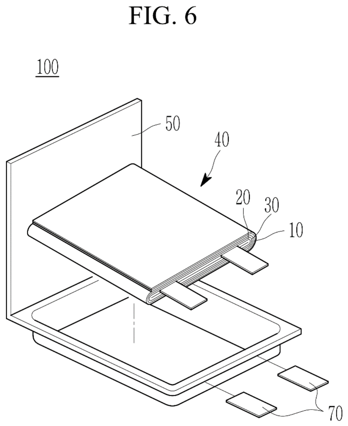

The rechargeable lithium battery may be classified into a cylindrical type, a prismatic type, a pouch type, a coin type, and/or the like depending on its shape. FIGS. 3 to 6 are each a schematic view illustrating a rechargeable lithium battery according to one or more embodiments of the present disclosure. FIG. 3 shows a cylindrical battery, FIG. 4 shows a prismatic battery, and FIGS. 5 and 6 each show a pouch-type (kind) battery. Referring to FIGS. 3 to 6, the rechargeable lithium battery 100 may include an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte. In one or more embodiments, the rechargeable lithium battery 100 may include a sealing member 60 that seals the case 50 as shown in FIG. 3. In one or more embodiments, as shown in FIG. 4, the rechargeable lithium battery 100 may include a positive electrode lead tab 11, a positive electrode terminal 12, a negative electrode lead tab 21, and a negative electrode terminal 22. In one or more embodiments, as shown in FIGS. 5 and 6, the rechargeable lithium battery 100 may include an electrode tab 70, that is, a positive electrode tab 71 and a negative electrode tab 72, serving as an electrical path for inducing the current formed in the electrode assembly 40 to the outside.

Examples and comparative examples of the present disclosure will be further described in more detail below. However, the following examples are only examples of the present disclosure, and the present disclosure is not limited to the following examples.

**Example 1**

**(1) Manufacturing of Negative Electrode Current Collector**

A porous substrate containing copper, which has porosity of about 80%, a pore size of about 480 $\mu$m, a thickness of about 300 $\mu$m, was prepared. The porous substrate had diamond-shaped pores, when the porous substrate was viewed from the top, and a size of the pores was obtained by measuring a major axis length and a minor axis length of each of the pores, when the porous substrate was viewed from the top, and then, calculating an average value thereof. Herein, the major axis length was about 640 $\mu$m, and the minor axis length was about 320 $\mu$m.

A composition for forming a carbon layer was prepared by mixing carbon black as a carbon-based material and a styrene-butadiene rubber (SBR) as a binder in a weight ratio of 30:70 (carbon-based material : binder) and dispersing the mixture in an aqueous solvent.

A composition for forming a silicon layer was prepared by mixing a silicon-carbon composite of $SiO_x$ and SCN as a silicon-based negative electrode active material, polyacrylic acid as a binder, and carbon nanotube as a conductive material in a weight ratio of 94:5:1 (silicon-based negative electrode active material : binder : conductive material) and dispersing the mixture in an aqueous solvent.

A portion of the porous substrate was immersed in the composition for forming a carbon layer and then, dried and heat-treated to form a carbon layer, on the formed carbon layer (i.e., first carbon layer (1A)), the composition for forming a silicon layer was coated and impregnated and then, dried and heat-treated to form a silicon layer, and on the formed silicon layer, the composition for forming a carbon layer was coated and impregnated and then, dried and heat-treated to form another carbon layer (i.e., first carbon layer (1B)). A final negative electrode current collector had a stacked structure that the first carbon layer (1A), the silicon layer, and the first carbon layer (1B) were sequentially stacked, and the materials in each layer were completely impregnated into the pores inside the porous substrate.

Herein, the first carbon layer (1A), the silicon layer, and the first carbon layer (1B) had respective thickness of 10 thickness%, 80 thickness%, and 10 thickness% based on 100 thickness% of the negative electrode current collector.

**(2) Manufacturing of Negative Electrode**

A composition for forming a negative electrode active material layer was prepared by mixing graphite as a negative electrode active material, a mixture of carboxymethyl cellulose (CMC) and styrene-butadiene rubber (SBR) in a weight ratio of 1:1 as a binder, and carbon nanotube (CNT) as a conductive material in a weight ratio of 97.5:2:0.5 (negative electrode active material : binder : conductive material) and then, dispersing the obtained mixture in an aqueous solvent. The composition for forming a negative electrode active material layer was coated on the manufactured negative electrode current collector and then, dried and compressed to manufacture a negative electrode.

### (3) Manufacturing of Rechargeable Lithium Battery Cell

A positive electrode active material composition was prepared by mixing $LiNi_{0.94}CO_{0.04}Al_{0.01}Mn_{0.01}O_2$ as a positive electrode active material, polyvinylidene fluoride as a binder, and carbon nanotube as a conductive material in a weight ratio of 96:2:2 (positive electrode active material : binder : conductive material). This positive electrode active material composition was dispersed in an N-methyl pyrrolidone solvent to prepare a positive electrode active material slurry, which was coated on a 15 $\mu$m-thick aluminum foil and then, dried and compressed to manufacture a positive electrode.

A 10 $\mu$m-thick polyethylene separator was interposed between the positive electrode and the negative electrode to manufacture an electrode assembly, which was inserted into a case, and an electrolyte was injected thereinto, thereby manufacturing a rechargeable lithium battery cell (100 mAh level pouch cell). The electrolyte was prepared by mixing EC (ethylene carbonate): EMC (ethylmethyl carbonate): DMC (dimethyl carbonate) in a volume ratio of 2:4:4 and dissolving 1.15 $M$ $LiPF_6$ in the mixed solvent.

### Comparative Example 1

A negative electrode current collector, a negative electrode, and a rechargeable lithium battery cell were each manufactured in substantially the same manner as in Example 1 except that the porous substrate was entirely filled with the composition for forming a carbon layer in manufacturing the negative electrode current collector. The negative electrode current collector was formed of a carbon layer alone, and the carbon layer included the porous substrate and the carbon-based material existing in the pores inside the porous substrate.

### Comparative Example 2

A negative electrode current collector, a negative electrode, and a rechargeable lithium battery cell were each manufactured in substantially the same manner as in Example 1 except that the porous substrate was entirely filled with the composition for forming a silicon layer in manufacturing the negative electrode current collector. The negative electrode current collector was formed of a silicon layer alone, and the silicon layer included the porous substrate and the silicon-based negative electrode active material existing in the pores inside the porous substrate.

### Conclusion

The negative electrode of Example 1, which included a negative electrode current collector having a structure that a first carbon layer (1A), a silicon layer, and a first carbon layer (1B) were sequentially stacked, wherein the first carbon layer (1A) and the first carbon layer (1B) arranged on both (e.g., simultaneously) surfaces (e.g., opposite surfaces) of the silicon layer, played a role of suppressing or reducing expansion of the silicon-based negative electrode active material, when the silicon-based negative electrode active material was shrunk or expanded, as charge/discharge proceeded, and in addition, improved energy density due to the silicon layer containing the silicon-based negative electrode active material in the negative electrode current collector. For example, the carbon layers (1A and 1B), positioned on both (opposite) sides of the silicon layer, played a role in mechanically stabilizing the electrode by suppressing the volumetric expansion and contraction of the silicon-based negative electrode active material during repeated charge and discharge cycles. This structural buffering effect helped to maintain the integrity of the electrode, thereby enhancing its cycle life and reliability. Moreover, the incorporation of the silicon layer within the porous substrate contributed to a substantial increase in energy density, owing to the high theoretical capacity of silicon compared to conventional graphite materials. The porous architecture allowed for uniform impregnation of active materials and facilitated efficient ion transport, which further improved the electrochemical performance. In contrast to the comparative examples-where the current collector was composed solely of either carbon or silicon-the hybrid layered structure in Example 1 achieved a balanced combination of mechanical durability, electrical conductivity, and high capacity, making it suitable for next-generation high-performance lithium-ion batteries.

For example, in Comparative Example 1 using a negative electrode current collector composed of a carbon layer alone, it was necessary to separately form a negative electrode active material layer including a negative electrode active material on the negative electrode current collector, which increased a thickness of an electrode plate, compared with Example 1, resultantly decreasing energy density.

In addition, in Comparative Example 2 using a negative electrode current collector composed of a silicon layer alone, the silicon-based negative electrode active material was repetitively shrunk and expanded according to repeated charges and discharges, resulting in damages on the electrode structure and thereby deteriorating battery performance and cycle performance, compared with Example 1.

While this disclosure has been described in connection with what is presently considered to be example embodiments, it is to be understood that the disclosure is not limited to the disclosed embodiments. In contrast, it is intended to cover one or more suitable modifications and equivalent arrangements included within the spirit and scope of the appended claims and equivalents thereof.

The present disclosure additionally includes the following numbered embodiments:

1. A negative electrode for a rechargeable lithium battery, comprising:

a negative electrode current collector comprising

a carbon layer comprising a first porous substrate and a carbon-based material inside the first porous substrate, and
a silicon layer comprising a second porous substrate and a silicon-based negative electrode active material inside the second porous substrate; and

a negative electrode active material layer comprising a negative electrode active material and arranged on a surface of the negative electrode current collector.

2. The negative electrode of embodiment 1, wherein

the first porous substrate and the second porous substrate each independently comprise a metal, and
the metal comprises copper, nickel, stainless, titanium, aluminum, or a combination thereof.

3. The negative electrode of embodiment 1, wherein

a thickness of the first porous substrate is about 5 $\mu$m to about 500 $\mu$m, and
a thickness of the second porous substrate is about 5 $\mu$m to about 500 $\mu$m.

4. The negative electrode of embodiment 1, wherein

a porosity of the first porous substrate is greater than or equal to about 50%, and
a porosity of the second porous substrate is greater than or equal to about 50%.

5. The negative electrode of embodiment 1, wherein

pores inside the first porous substrate each have a size of about 300 $\mu$m to about 1,000 $\mu$m, and
pores inside the second porous substrate each have a size of about 300 $\mu$m to about 1,000 $\mu$m.

6. The negative electrode of embodiment 1, wherein
the carbon-based material comprises amorphous carbon.

7. The negative electrode of embodiment 1, wherein

the carbon layer further comprises a binder,
an amount of the carbon-based material in the carbon layer is about 10 wt% to about 30 wt% based on a total weight of 100 wt% of the carbon layer excluding the first porous substrate, and
an amount of the binder is about 70 wt% to about 90 wt% based on the total weight of 100 wt% of the carbon layer excluding the first porous substrate.

8. The negative electrode of embodiment 1, wherein
the silicon-based negative electrode active material comprises a silicon-carbon composite.

9. The negative electrode of embodiment 1, wherein

the silicon layer further comprises a binder and a conductive material,
an amount of the silicon-based negative electrode active material is about 89 wt% to about 99.9 wt% based on a total weight of 100 wt% of the silicon layer excluding the second porous substrate in the silicon layer,
an amount of the binder is about 1 wt% to about 10 wt% based on the total weight of 100 wt% of the silicon layer excluding the second porous substrate in the silicon layer, and
an amount of the conductive material is about 0.1 wt% to about 1 wt% based on the total weight of 100 wt% of the silicon layer excluding the second porous substrate in the silicon layer.

10. The negative electrode of embodiment 1, wherein:

the carbon layer comprises a first carbon layer (1A) and a first carbon layer (1B);
the first porous substrate comprises a first porous substrate (1A) and a first porous substrate (1B); and
the carbon-based material comprises a first carbon-based material (1A) and a carbon-based material (1B),
wherein the silicon layer is on the first carbon layer (1A), and the first carbon layer (1B) is on the silicon layer, and
wherein the first carbon layer (1A) comprises the first porous substrate (1A) and the first carbon-based material
(1A) inside the first porous substrate (1A), and the first carbon layer (1B) comprises the first porous substrate (1B)
and the first carbon-based material (1B) inside the first porous substrate (1B).

11. The negative electrode of embodiment 10, wherein

a thickness of the silicon layer is about 50 thickness% to about 99 thickness% based on 100 thickness% of the
negative electrode current collector, and
a thickness sum of the first carbon layer (1A) and the first carbon layer (1B) is about 1 thickness% to about 50
thickness% based on 100 thickness% of the negative electrode current collector.

12. The negative electrode of embodiment 10, wherein
the first carbon layer (1A) and the first carbon layer (1B) have a thickness ratio of about 1:9 to about 9:1.

13. The negative electrode of embodiment 1, wherein
the negative electrode active material comprises a carbon-based negative electrode active material, a silicon-based
negative electrode active material, or a combination thereof.

14. The negative electrode of embodiment 1, wherein
the negative electrode active material layer has a structure of one layer or two or more layers.

15. A rechargeable lithium battery (cell), comprising a positive electrode, the negative electrode of any one of
embodiments 1 to 14, and an electrolyte.

**Reference Numerals**

| | | | |
|---|---|---|---|
| 1: | negative electrode current collector | 2a: | first carbon layer (1A) |
| 3: | silicon layer | 2b: | first carbon layer (1B) |
| 4: | porous substrate | 5: | pore |
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A negative electrode (20) for a rechargeable lithium battery (100), comprising:

a negative electrode current collector (1) comprising

a carbon layer comprising a first porous substrate and a carbon-based material inside the first porous
substrate, and
a silicon layer (3) comprising a second porous substrate and a silicon-based negative electrode active
material inside the second porous substrate; and

a negative electrode active material layer comprising a negative electrode active material and arranged on a
surface of the negative electrode current collector (1).

2. The negative electrode (20) as claimed in claim 1, wherein

the first porous substrate and the second porous substrate each independently comprise a metal, and
the metal comprises copper, nickel, stainless, titanium, aluminum, or a combination thereof.

3. The negative electrode (20) as claimed in claim 1 or 2, wherein

a thickness of the first porous substrate is about 5 $\mu$m to about 500 $\mu$m, and/or
a thickness of the second porous substrate is about 5 $\mu$m to about 500 $\mu$m.

4. The negative electrode (20) of any one of the preceding claims, wherein

a porosity of the first porous substrate is greater than or equal to about 50%, and/or
a porosity of the second porous substrate is greater than or equal to about 50%.

5. The negative electrode (20) of any one of the preceding claims, wherein

pores (5) inside the first porous substrate each have a size of about 300 $\mu$m to about 1,000 $\mu$m, and/or
pores (5) inside the second porous substrate each have a size of about 300 $\mu$m to about 1,000 $\mu$m.

6. The negative electrode (20) of any one of the preceding claims, wherein the carbon-based material comprises amorphous carbon.

7. The negative electrode (20) of any one of the preceding claims, wherein

the carbon layer further comprises a binder,
an amount of the carbon-based material in the carbon layer is about 10 wt% to about 30 wt% based on a total weight of 100 wt% of the carbon layer excluding the first porous substrate, and
an amount of the binder is about 70 wt% to about 90 wt% based on the total weight of 100 wt% of the carbon layer excluding the first porous substrate.

8. The negative electrode (20) of any one of the preceding claims, wherein
the silicon-based negative electrode active material comprises a silicon-carbon composite.

9. The negative electrode (20) of any one of the preceding claims, wherein

the silicon layer (3) further comprises a binder and a conductive material,
an amount of the silicon-based negative electrode (20) active material is about 89 wt% to about 99.9 wt% based on a total weight of 100 wt% of the silicon layer (3) excluding the second porous substrate in the silicon layer (3),
an amount of the binder is about 1 wt% to about 10 wt% based on the total weight of 100 wt% of the silicon layer (3) excluding the second porous substrate in the silicon layer (3), and
an amount of the conductive material is about 0.1 wt% to about 1 wt% based on the total weight of 100 wt% of the silicon layer (3) excluding the second porous substrate in the silicon layer (3).

10. The negative electrode (20) of any one of the preceding claims, wherein:

the carbon layer comprises a first carbon layer (1A) and a first carbon layer (1B);
the first porous substrate comprises a first porous substrate (1A) and a first porous substrate (1B); and
the carbon-based material comprises a first carbon-based material (1A) and a carbon-based material (1B),
wherein the silicon layer (3) is on the first carbon layer (1A), and the first carbon layer (1B) is on the silicon layer (3), and
wherein the first carbon layer (1A) comprises the first porous substrate (1A) and the first carbon-based material (1A) inside the first porous substrate (1A), and the first carbon layer (1B) comprises the first porous substrate (1B) and the first carbon-based material (1B) inside the first porous substrate (1B).

11. The negative electrode (20) as claimed in claim 10, wherein

a thickness of the silicon layer (3) is about 50 thickness% to about 99 thickness% based on 100 thickness% of the negative electrode current collector (1), and

a thickness sum of the first carbon layer (1A) and the first carbon layer (1B) is about 1 thickness% to about 50 thickness% based on 100 thickness% of the negative electrode current collector (1).

12. The negative electrode (20) as claimed in claim 10 or 11, wherein
the first carbon layer (1A) and the first carbon layer (1B) have a thickness ratio of about 1:9 to about 9:1.

13. The negative electrode (20) of any one of the preceding claims, wherein
the negative electrode active material comprises a carbon-based negative electrode active material, a silicon-based negative electrode active material, or a combination thereof.

14. The negative electrode (20) of any one of the preceding claims, wherein
the negative electrode active material layer has a structure of one layer or two or more layers.

15. A rechargeable lithium battery (100), comprising a positive electrode (10), the negative electrode (20) according to any one of the preceding claims, and an electrolyte.

FIG. 1

FIG. 2

# FIG. 3

# FIG. 4

# FIG. 5

FIG. 6

Europäisches
Patentamt

European
Patent Office

Office européen
des brevets

# EUROPEAN SEARCH REPORT

**Application Number**

EP 25 21 0014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 806 199 A1 (HONDA MOTOR CO LTD [JP]; SUMITOMO ELECTRIC INDUSTRIES [JP]) 14 April 2021 (2021-04-14) * paragraphs [0009], [0017] - [0025], [0036] - [0040]; claims 1-3; figure 1 * | 1-15 | INV. H01M4/133 H01M4/134 H01M4/38 H01M4/587 H01M4/62 |
| | ----- | | H01M4/66 |
| A | US 2005/266304 A1 (HONDA HITOHIKO [JP] ET AL) 1 December 2005 (2005-12-01) * paragraphs [0020] - [0024]; claims 1-14; figures 1-6 * | 1-15 | H01M4/80 H01M10/0525 |
| | ----- | | |

**TECHNICAL FIELDS SEARCHED (IPC)**

H01M

The present search report has been drawn up for all claims

| Place of search | Date of completion of the search | Examiner |
|---|---|---|
| Munich | 4 March 2026 | Szekely, Noemi Kinga |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 0014

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2026

| Patent document cited in search report | | Publication date | Patent family member(s) | | Publication date |
|---|---|---|---|---|---|
| EP 3806199 | A1 | 14-04-2021 | CN | 112055902 A | 08-12-2020 |
| | | | EP | 3806199 A1 | 14-04-2021 |
| | | | JP | WO2019230322 A1 | 10-06-2021 |
| | | | US | 2021313574 A1 | 07-10-2021 |
| | | | WO | 2019230322 A1 | 05-12-2019 |
| US 2005266304 | A1 | 01-12-2005 | NONE | | |

EPO FORM P0459

For more details about this annex : see Official Journal of the European Patent Office, No. 12/82